# EUROPEAN PATENT APPLICATION

(11) **EP 4 607 207 A1**
(43) Date of publication of application: **27.08.2025**
(21) Application number: 25159020.4
(22) Date of filing: 20.02.2025
(51) Int. Cl.: G01P 5/26, G01P 13/02, G01S 17/58, G01P 5/20, G01B 9/02

(54) **MODULAR AIR-DATA SYSTEM**

(30) Priority: 20.02.2024 US 202463555654 P; 19.02.2025 US 202519057362
(71) Applicant: Honeywell International Inc., Charlotte, NC 28202 (US)
(72) Inventor: DOBBINS, Thomas, Charlotte, 28202 (US); WIEBOLD, Matthew, Charlotte, 28202 (US); DRASAL, Zbynek, Charlotte, 28202 (US)
(74) Representative: Haseltine Lake Kempner LLP

(57) **Abstract**

A modular air-data system is provided that includes a plurality of modules and an optical head. Each module includes an emitter and a receiver. The emitter is configured to emit generated light beams. The receiver is configured to receive scattered light beams caused by the emitted generate light beams being scattered off of particles in the atmosphere. The optical head is remotely located from the plurality of modules. The optical head includes a laser, a detector, and a controller. The laser is configured to generate the generated light beams. The detector is configured to at least one of detect and process the scattered light beams. The controller is in communication with at least one of the laser and the detector. The controller is configured to determine air-data based on the generated light beams and the scattered light beams detected and processed by the detector.

## Description

### CROSS-REFERENCE TO RELATED APPLICATIONS

This Application claims priority to U.S. Provisional Application Serial No. 63/555,654, same title herewith, filed on February 20, 2024, which is incorporated in its entirety herein by reference.

### BACKGROUND

Vehicles, such as avionic vehicles, such as fixed-wing aircraft, rotor-craft etc., use flight control avionics that rely on information from sensor inputs. An example of a sensor that may provide information needed by an avionic vehicle is a pneumatic sensor in a traditional pitot-static system. Information from this sensor, which may be generally referred to as air-data, may be used to evaluate aircraft-to-airstream flight conditions/status and is critical for flight-control and situational awareness of the vehicle. For example, air-data may be used to determine such things as true/computed/indicated airspeed (TAS/CAS/IAS), angle-of-attack/-side-slip (AoA/AoS), static/total air temperature (SAT/TAT), pressure altitude (H) and Mach number (M). A traditional approach to obtain air-data is with the use of pitot-probes. Pitot-probes, however, are prone to suffer from failures, leading to incorrect or no air-data which historically has led to several serious flight accidents. Incorrect air-data from pitot-probes may be caused by physical blockages of air inlet ports due to ice formation during in-flight or on-ground activities due to an accidental mechanical blockage. Other causes of incorrect air-data from a pitot-probe may be due to a sensitivity to aircraft aerodynamic boundary layer effects (velocity plus ps-alt. measurement), engine thrust effects (velocity plus ps-alt. measurement), and/or direct sun exposure (SAT), which may lead to systematic bias in the air-data. Further, air-data from pitot-probes has a lower accuracy at low-speed where an AoA by wing-vanes may affect potential continuity and availability of an air flow measured by the pitot-probe.

Another system used to gather air-data includes a light detecting and ranging (LiDAR) optical air-data system. In a LiDAR optical air-data system, a light beam is directed out of the aircraft into the atmosphere. Particles in the atmosphere reflect or scatter the light beam back to an optical receiver of the LiDAR optical air-data system. An interferometer in the LiDAR optical air-data system measures changes in the wavelength between the transmitted light beam and the scattered back light beam in determining air-data. Although, a LiDAR optical air-data system addresses some of the downfalls of a pitot-probe system, the size of the LiDAR optical air-data system makes it difficult to mount on some avionic vehicles. The size issue is further compounded when it is desired to gather air-data from different directions from the aircraft which would require the installation of an LiDAR optical system for each desired direction to gather air-data from the vehicle.

For the reasons stated above and for other reasons stated below which will become apparent to those skilled in the art upon reading and understanding the present specification, there is a need in the art for an effective and efficient system to gather air-data information.

### SUMMARY

The following summary is made by way of example and not by way of limitation. It is merely provided to aid the reader in understanding some of the aspects of the subject matter described. Embodiments provide an air-data system that uses LiDAR optical system to generate air-date information for use by a vehicle.

In one embodiment, a modular air-data system is provided. The modular air-data system includes a plurality of modules and an optical head. The plurality of modules are positioned on a vehicle to monitor at least one area of an atmosphere around the vehicle. Each module includes an emitter and a receiver. The emitter is configured to emit generated light beams. The receiver is configured to receive scattered light beams. The scattered light beams are caused by the emitted generate light beams being scattered off of particles in the atmosphere. The optical head is remotely located from the plurality of modules. The optical head includes a laser, a detector, and a controller. The laser is coupled with the emitter of each module. The laser is configured to generate the generated light beams. The detector is coupled with the receiver of each module. The detector is configured to at least one of detect and process the scattered light beams. The controller is in communication with at least one of the laser and the detector. The controller is configured to determine air-data based on the generated light beams and the scattered light beams detected and processed by the detector.

In another embodiment, another modular air-data system is provided. The modular air-data system includes a plurality of modules and an optical head. Each module is positioned on a vehicle to monitor at least one area of an atmosphere around the vehicle. Each module includes an emitter and a receiver. The emitter is configured to emit generated light beams. The receiver is configured to receive scattered light beams. The scattered light beams being caused by the emitted generated light beams being scattered off of particles in the atmosphere. The optical head includes a laser, beam splitting optics, a detector, a controller and a clock. The laser is in communication with the emitter of each module. The laser is configured to generate the generated light beams. The beam splitting optics are configured to split the generated light beams to each of the modules. The detector is in communication with the receiver of each module. The detector is configured to at least one of detect and process the scattered light beams. The controller is in communication with at least one of the laser and the detector. The controller is configured to determine air-data based on the generated light beams and the scattered light beams detected and processed by the detector. The clock is in communication with the controller. The controller is configured to associate determined air-data at select distances from the vehicle using the clock.

In yet another embodiment, a method of operating a modular air-data system. The method includes generating generated light beams with a laser; directing the generated light beams to a plurality of spaced modules; emitting the generated light beams from emitters of the plurality of spaced modules; receiving scattered light beams with receivers of the plurality of spaced modules; and determining air-data based in part on the received scattered light beams.

### BRIEF DESCRIPTION OF THE DRAWINGS

The present invention can be more easily understood and further advantages and uses thereof will be more readily apparent, when considered in view of the detailed description and the following figures in which:
Figure 1 is a block diagram of a modular air-data system according to an example aspect of the present invention;
Figure 2 is a side perspective view of a module according to an example aspect of the present invention;
Figure 3, is a side view block diagram of a module according to an example aspect of the present invention;
Figure 4 illustrates a block diagram of a bracket and a module according to an example aspect of the present invention;
Figure 5 illustrates a block diagram of a typical LiDAR optical air-data system mounted to a surface of a vehicle of the prior art;
Figure 6A illustrates a block diagram of a plurality of modules coupled to a surface of a vehicle according to an example aspect of the present invention;
Figure 6B illustrates a block diagram of a plurality of modules coupled to a surface of a vehicle according to an example aspect of the present invention;
Figure 7 illustrates example directions of emitted generated light beams with the use of the modular air-data system according to an example aspect of the present invention;
Figure 8 illustrates a block diagram of a wind gust alleviation system according to an example aspect of the present invention;
Figure 9 illustrates example directions of emitted generated light beams with the use of the wind gust alleviation system according to an example aspect of the present invention;
Figure 10A illustrates a block diagram of a first configuration of a set of two modules according to an example aspect of the present invention;
Figure 10B illustrates a block diagram of a second configuration of a set of two modules according to an example aspect of the present invention;
Figure 10C illustrates angles associated to light beam directions, vehicle skin surface, and module base in a two set module configuration according to an example aspect of the present invention;
Figure 10D illustrates light beam directions from a front view of a vehicle with the use of two set modules according to an example aspect of the present invention;
Figure 10E illustrates light beam directions from a side view of a vehicle with the use of a two set of modules positioned in a first configuration according to an example aspect of the present invention;
Figure 10F illustrates light beam directions from a side view of a vehicle with the use of a two set of modules positioned in a second configuration according to an example aspect of the present invention;
Figure 11A illustrates a block diagram of a first configuration of a set of three modules according to an example aspect of the present invention;
Figure 11B illustrates a block diagram of a second configuration of a set of three modules according to an example aspect of the present invention;
Figure 11C illustrates angles associated to light beam directions, vehicle skin surface, and module base in a three set module configuration according to an example aspect of the present invention;
Figure 11D illustrates light beam directions from a front view of a vehicle with the use of a three set of modules according to an example aspect of the present invention;
Figure 11E illustrates light beam directions from a side view of a vehicle with the use of a three set of modules positioned in a first configuration according to an example aspect of the present invention;
Figure 11F illustrates light beam directions from a side view of a vehicle with the use of a three set of modules positioned in a second configuration according to an example aspect of the present invention;
Figure 12A illustrates a block diagram of a first configuration of a set of four modules according to an example aspect of the present invention;
Figure 12B illustrates a block diagram of a second configuration of a set of four modules according to an example aspect of the present invention;
Figure 12C illustrates a block diagram of a third configuration of a set of four modules according to an example aspect of the present invention;
Figure 12D illustrates angles associated to light beam directions, vehicle skin surface, and a module base in a four set module configuration according to an example aspect of the present invention;
Figure 12E illustrates light beam directions from a front view of a vehicle with the use of a four set of modules according to an example aspect of the present invention;
Figure 12F illustrates light beam directions from a side view of a vehicle with the use of a two set of modules according to an example aspect of the present invention; and
Figure 13 illustrates an air-data gathering flow diagram according to an example aspect of the present invention.

In accordance with common practice, the various described features are not drawn to scale but are drawn to emphasize specific features relevant to the present invention. Reference characters denote like elements throughout Figures and text.

### DETAILED DESCRIPTION

In the following detailed description, reference is made to the accompanying drawings, which form a part hereof, and in which is shown by way of illustration specific embodiments in which the inventions may be practiced. These embodiments are described in sufficient detail to enable those skilled in the art to practice the invention, and it is to be understood that other embodiments may be utilized and that changes may be made without departing from the spirit and scope of the present invention. The following detailed description is, therefore, not to be taken in a limiting sense, and the scope of the present invention is defined only by the claims and equivalents thereof.

Embodiments of the present invention provide a modular air-data system that includes a light detecting and ranging (LiDAR) optical air-data system. The modular air-data system includes an optical head and at least one module that is in communication with the optical head at a spaced distance. Each module may include an emitter (transmitter) and a receiver. In examples, each module may be used individually, in pairs, as a set of modules, or as a unit to flexibly make air-data measurements of atmospheric conditions around a vehicle such as, but not limited to, a fixed wing aircraft or rotorcraft. A module, in one example, may include an optical filter. Further in an example, the modules of the air-data system are designed to be removable and replaceable individually or as a unit to aid the speed of maintenance and repair.

In another example, a LiDAR alleviation system, used to detect and mitigate gust loads, is combined with the modular air-data system to provide a cost-effective solution for both systems. The combined systems may share lasers, optics, and detectors.

The terms "coupled with" and "in communication with" along with derivations of the terms, may be used herein. These terms indicate that two or more elements are interacting with each other. The interaction may be physical or non-physical. Physical interaction includes physical connecting of the two or more elements. Non-physical interaction includes, but are not limited to, interactions through signals, such as, but not limited to, power signals, light beams, communication signals, etc. The interaction between the two or more elements may be direct or through intermediate elements.

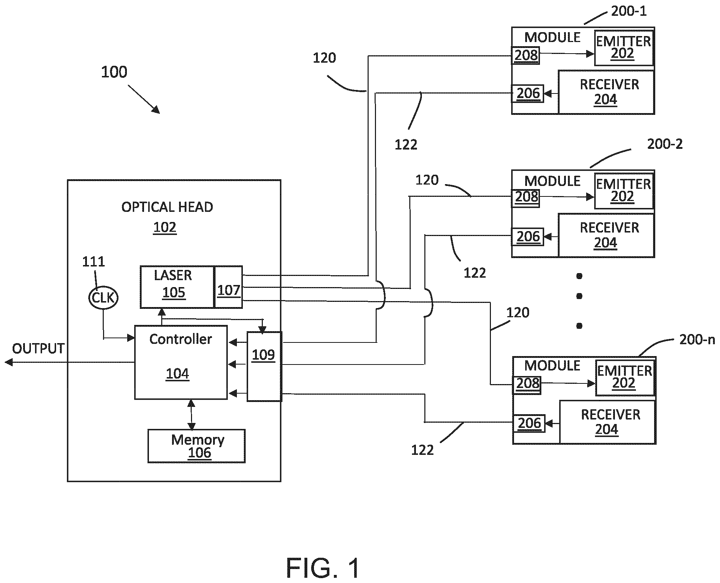

Figure 1 illustrates a block diagram of a modular air data system 100 according to one example. The modular air-data system 100 includes an optical head 102. Within the optical head is a controller 104 and a memory 106.

In general, controller 104 may include any one or more of a processor, microprocessor, a digital signal processor (DSP), an application specific integrated circuit (ASIC), a field program gate array (FPGA), or equivalent discrete or integrated logic circuitry. In some example embodiments, controller 104 may include multiple components, such as any combination of one or more microprocessors, one or more controllers, one or more DSPs, one or more ASICs, one or more FPGAs, as well as other discrete or integrated logic circuitry. The functions attributed to controller 104 herein may be embodied as software, firmware, hardware or any combination thereof. Controller 104 may be part of a system controller or a component controller. Memory 106 may include computer-readable operating instructions that, when executed by controller 104 provides functions of the modular air-data system 100. The computer readable instructions may be encoded within the memory. Memory is an appropriate non-transitory storage medium or media including any volatile, nonvolatile, magnetic, optical, or electrical media, such as, but not limited to, a random-access memory (RAM), read-only memory (ROM), non-volatile RAM (NVRAM), electrically-erasable programmable ROM (EEPROM), flash memory, or any other storage medium.

The optical head 102 also includes, in this example, a laser 105 and beam splitting optics 107. The controller 104 controls the laser 105 to generate pulsed light beams (generated light beams) in an example. Beam splitting optics 107 of the optical head 102 are used to split the light beams into emit fiber optic paths 120. Each emit fiber optic path 120 is coupled to associated modules 200-1, 200-2 through 200-n. Each emit fiber optic path 120 provides a generated signal path for the generated light beams. Each module 200-1 through 200-n may be generally referenced as "module 200." The optical head 102 is positioned remotely from the modules 200. In one example, at least some of the modules 200-1, 200-2 through 200-n are spaced apart from each other to monitor different areas of the atmosphere around a vehicle that includes the modular air-data system 100.

Each module 200 includes an input interface 208 or input connector that is coupled to an associated emit fiber optic path 120 and an emitter 202 that is optically coupled to the input interface 208. The emitter 202 (transmitter) includes transmitting optics configured to direct the generated laser beam generated by the laser 105 into the atmosphere in a desired direction. Scattered light beams reflected back off of particles in the atmosphere are received by the receiver 204 that may include telescope optics to direct the returned scattered light beam. The scattered light beams are optically coupled to an output interface 206, such as an output coupler. Each output interface 206 is coupled to an associated scattered fiber optic path 122. Each scattered fiber optic path 122 provides a scattered signal path for the scattered light beams. A detector 109 of the optical head 102 is in communication with each scattered back fiber optic path. The detector 109 may include an interferometer to at least measure changes in wavelength between the generated light beams and the scattered light beams.

Controller 104 is in communication with optical detector 109. Controller 104 is configured to process the output of the optical detector 109 to determine air-data. The determined air-data may include, but is not limited to, wind speed using Doppler shift calculations, temperature based on a broadening in the scattered light beam, and particle density, etc.

In one example, an association between a scattered back fiber path 122, an associated module 200, and the direction/location the module 200 is configured to monitor, is stored in memory 106. Controller 104 uses the associations when determining air-data associated with a specific region of the atmosphere around the aircraft. Further in an example, separate areas of the detector 109 are each associated with a module 200. The associations are stored in memory 106 and are used by controller 104 when determining air-data associated with a specific region of the atmosphere around the vehicle.

The optical head 102 further includes a clock 111 in this example. Controller 104 uses clock 111 to time how long it takes a pulsed scattered light beam to be received at the optical detector 109 from the time the light beam was generated by the laser 105. Based on the time of travel and the speed of light, controller 104 can determine not only the air-data but also the distance from aircraft the air-data was detected. In one example, controller 104 implements operating instructions stored in memory 106 to pulse the light beam from laser 105 and read an output from the detector 109 at a specific time from the pulse using the clock to collect air-data at a specific distance from the vehicle in the direction provided by an associated module 200. Controller 104 outputs the air-data which can be used by other systems of the vehicle during operation.

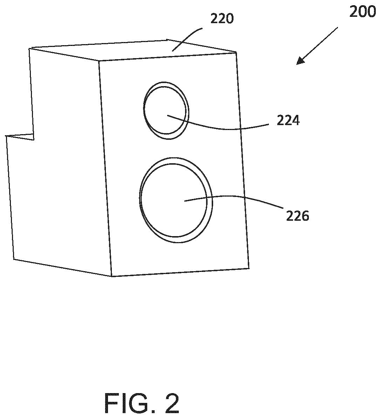

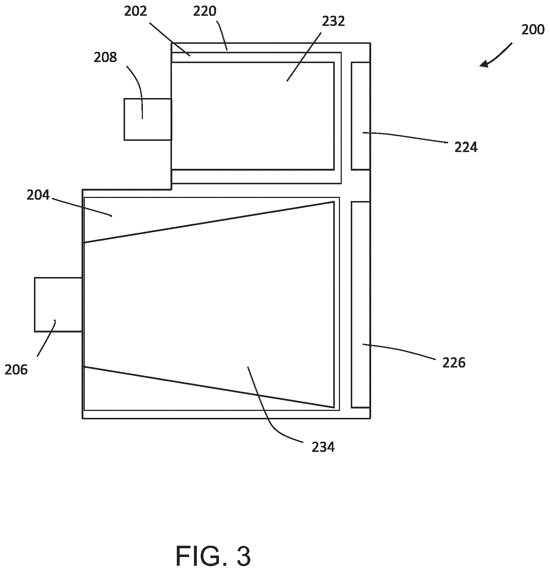

Figure 2 illustrates an example module 200. Module 200 includes a module housing 220 and an emit window 224 to the emitter 202 of the module 200 and a receive window 226 to the receiver 204 of the module 200. Solar filtering may be included to mitigate reflections. In one example, solar filtering is located in the emit window 224 and the receive window 226. A side view block diagram of module 200 is illustrated in Figure 3. Figure 3 illustrates the module 200 includes a telescope housing 234 that includes a telescope to focus reflect light beams and an emit housing 232 that houses emit optics to emit the generated light beams through the emit window 224 into the atmosphere.

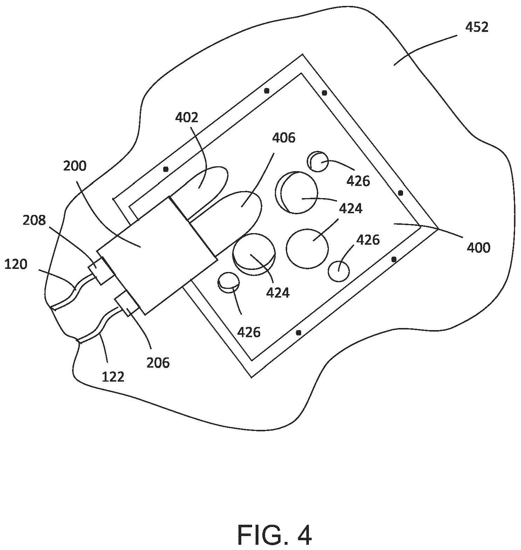

Figure 4 illustrates an example of a module bracket 400 that is in turn coupled to a vehicle surface portion 452. The module bracket 400 in this example provides for the coupling of four different modules 200. In Figure 4, only one module 200 has been coupled to module bracket 400 in this illustration. The positioning of each module 200 by the module bracket 400 allows for air-data to be gathered in four different areas of the atmosphere via directing (angling) each module 200 in a select desired direction. That is, the bracket 400 mounts the modules 200 to a vehicle in a manner to direct emit generated light beams from associated modules at a select angle in relation to a surface of the vehicle. The module bracket 400 of Figure 4 illustrates emit passages 426 and receive passages 424 pairs. Each pair accommodates one module 200. An emit baffle tube 402 may be used to couple a light beam path from the emitter 202 of a module 200 out the emit passage 426 of the bracket 400. A receive baffle tube 406 may be used to couple a scattered light beam path from an associated receive passage 424 of the bracket 400 to the receiver 204 of the module 200. The use of modules 200 and module bracket 400 provides for the air-data measurements in four different areas in the atmosphere using a compact system. Further, if issues arise with one module 200 the other modules 200 may still be used to gather air-data. Further the faulty module 200 can simply be replaced.

Figure 4 further illustrates input interface 208 that is coupled to an associated emit fiber optic path 120 and output interface 206 that is coupled to an associated scattered fiber optic path 122.

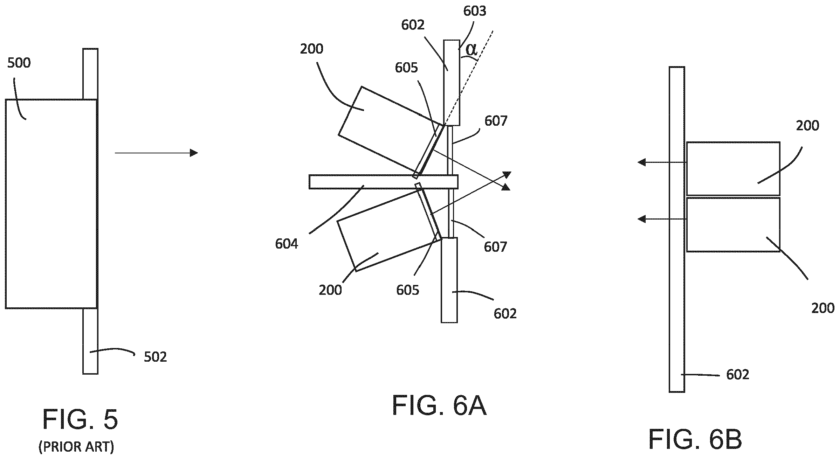

As discussed above, the use of modules 200 allows for air-data to captured in areas that are near to each other and that are at a select angle to a surface 502 of a vehicle. For example, Figure 5 illustrates a block diagram of a typical LiDAR optical air-data system 500, known in the art, mounted to a vehicle surface 602. As illustrated, the LiDAR optical air-data system is coupled to a surface 502 such that the emitted generate light beam extends in a direction that is generally perpendicular to the surface 502 of the vehicle. Figure 6A illustrates how, in examples, modules 200 may be positioned so the emitted generated light beams may be directed into the atmosphere at select angles to monitor air-data in other areas of the atmosphere than just areas perpendicular to the vehicle.

In Figure 6A, two modules 200 are shown mounted to bracket 604 using a modular brace 605. The modular brace 605 is positioned at a select angle α to a skin surface 603 of a surface 602 of a vehicle to direct the associated emitted generated light beam through an associated window 607 at a select angle from the vehicle. In an example, a latching mechanism may be used to hold the modules in place and a fiber management system may be used to manage the fibers in the emit fiber optic paths 120 and the scattered fiber optic paths 122. In one example the latching mechanism may be disengaged from a front position to replace an associated module 200. Another vehicle mounting option is illustrated in Figure 6B where two modules (a set of two modules) are placed next to each other to monitor air-data in areas next to each other or air-data in the same direction at different differences. The compact modular system as described takes up less space than the use of two separate LiDAR optical air-data system needed in the prior art.

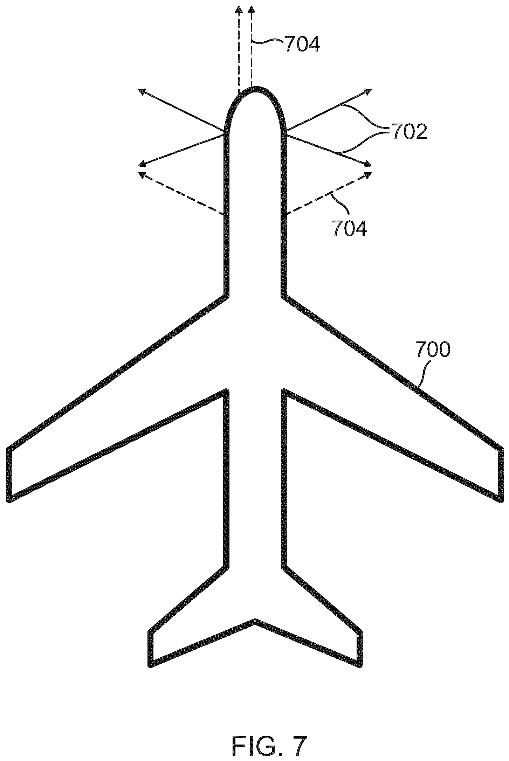

Further, an example of possible locations of emitted generated light beams from modules from a vehicle 700 (which is an aircraft in this example) using different mounting options is illustrated in Figure 7. In the example shown in Figure 7, primary emitted generated light beams 702 and secondary emitted generated light beams 704 are illustrated as being directed out of the vehicle at a desired angle.

The modular air data system 100 may be part of a wind gust alleviation system 800. Vehicles such as aircrafts, are typically over designed to handle stresses caused by wind gust. The over designed aircraft include additional structural support in the wings which may lead to reduced fuel efficiency. Wind gust alleviation system 800 of examples may be used to mitigate stresses caused by wind gust by controlling operation of the vehicle, such as but not limited to, changing the flap positions on the wings in anticipation of the wind gusts and changing the operating speed of one or more engines of the aircraft. The use of a wind gust alleviation system 800 may reduce the need for over design of the aircraft leading to a more fuel-efficient aircraft.

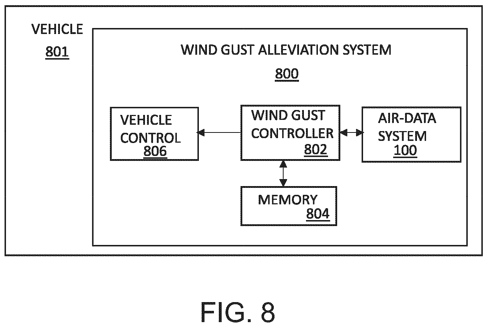

A block diagram of a vehicle 801 that includes the wind gust alleviation system 800 of an example is illustrated in Figure 8. The wind gust alleviation system 800 in this example includes a wind gust controller 802 and memory 804.

In general, the wind gust controller 802 may include any one or more of a processor, microprocessor, a digital signal processor (DSP), an application specific integrated circuit (ASIC), a field program gate array (FPGA), or equivalent discrete or integrated logic circuitry. In some example embodiments, the wind gust controller 802 may include multiple components, such as any combination of one or more microprocessors, one or more controllers, one or more DSPs, one or more ASICs, one or more FPGAs, as well as other discrete or integrated logic circuitry. The functions attributed to the wind gust controller 802 herein may be embodied as software, firmware, hardware or any combination thereof. Wind gust controller 802 may be part of a system controller, component controller or part of controller 104 of the air-data system. Memory 804 may include computer-readable operating instructions that, when executed by the wind gust controller 802 provides functions of the wind gust alleviation system 800. The computer readable instructions may be encoded within the memory. Memory is an appropriate non-transitory storage medium or media including any volatile, nonvolatile, magnetic, optical, or electrical media, such as, but not limited to, a random-access memory (RAM), read-only memory (ROM), non-volatile RAM (NVRAM), electrically-erasable programmable ROM (EEPROM), flash memory, or any other storage medium. Memory 804 may be included in memory 106 in an embodiment.

The wind gust controller 802 is in communication with the air-data system 100 to receive air-data. The wind gust controller 802, based on operating instructions stored in memory 804 determines if a wind gust has been detected with air-data from the air-data system 100. If a wind gust has been detected, the wind gust controller 802 instructs a vehicle control 806 to adjust operation of the vehicle 801 in anticipation of the wind gust to mitigate the wing gust effects on the vehicle 801. The wing gust effects can cause passenger discomfort and stress on vehicle structures.

To provide the vehicle enough time to compensate for wind gusts the aircraft may be flying into, areas of atmosphere hundreds of meters in front of the aircraft must be monitored with the air-data system 100. As discussed above, the controller 104 of the air-data system 100, using clock data would set a time to monitor for returned scattered light beams that would provide the air-data at the desired distance from the vehicle 801. The wind gust controller 802 in an embodiment may use the velocity of the vehicle in the direction of travel in determining when to sample the scattered light beam. In one embodiment, the wind gust controller 802 is part of controller 104 of the air-data system 100. Further, in examples, the power of the laser 105 in the optical head 102 and the size of the telescope in the receiver 204 of each associated module 200 of the air-data system 100 are selected based on distance of the areas of atmosphere desired to be monitored.

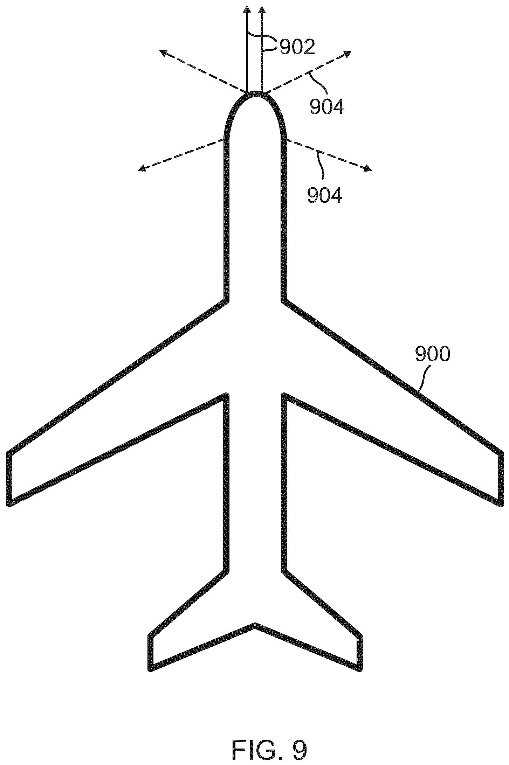

Figure 9 illustrates pulsed emitted generated light beams from a vehicle in an example. In this example, two forward emitted generated light beams 902 from the air-data system 100 are projected in the direction of travel of the vehicle 801. Air-data determined from returns from the two forward emitted generated light beams 902 may be used by the wind gust alleviation system 800 in determining if operations of the vehicle 801 should be changed by the vehicle control 806. Other emitted generated light beams 904 may also be used to determine wind gust that may affect the vehicle that the wind gust alleviation system 800 can address.

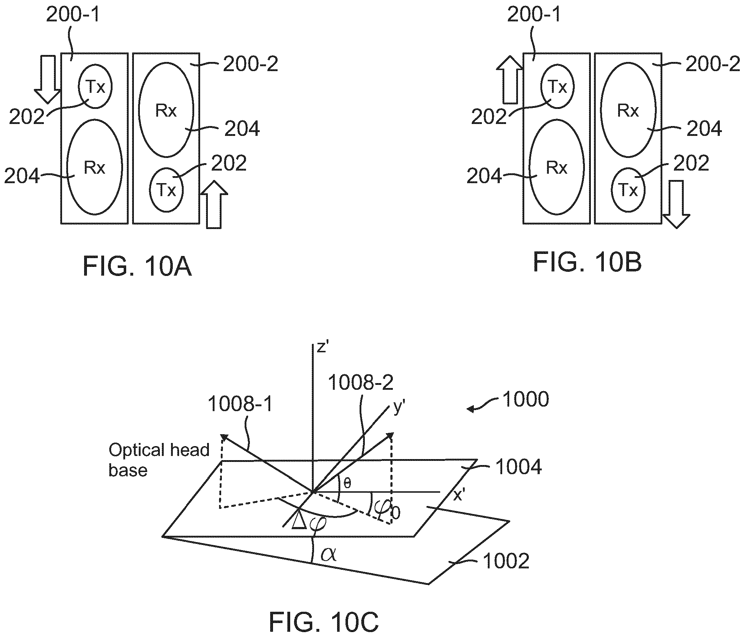

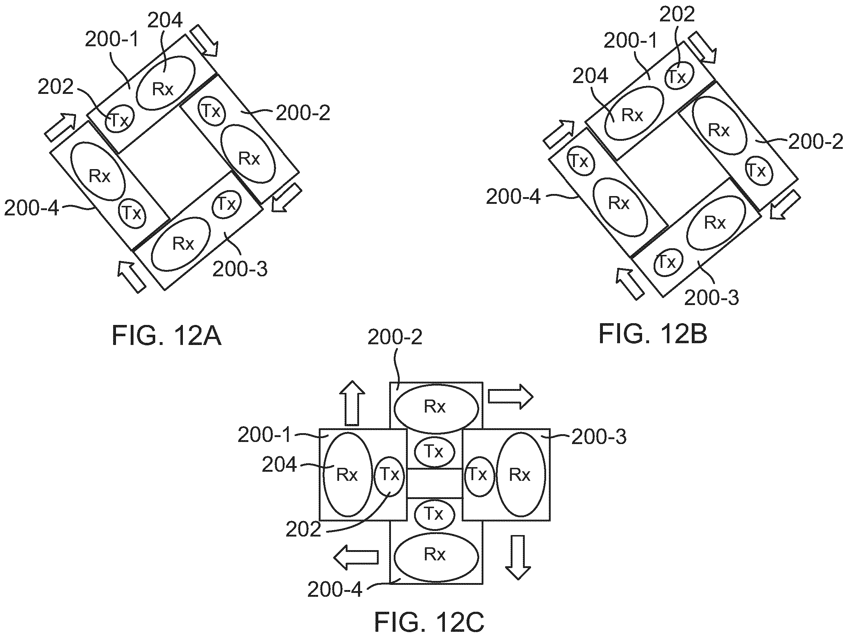

Embodiments may place a set of modules on a vehicle such as, but not limited to, an aircraft to get a complete set of air-data via multi-directional measurements. The air-data may include true air-speed, angle of attack/side-slip, static air temperature, air-density, and water-vapor measurement for contrail avoidance. For example, a set of two or more modules 200 (a set of modules) may be placed in relation to each other on a vehicle, such as an aircraft to obtain desired multi-directional measurements to provide multi-directional air-data. In one example, modules 200 are positioned in relation to a vehicle body frame to maximize a system sensitivity to a velocity vector measurement. Figure 10A illustrates the use of a two set that includes module 200-1 and 200-2 in a first configuration. Figure 10B illustrates a set with two modules in a second configuration. Each module 200 includes a transmitter (or emitter 202) and a receiver 204. Figure 12C illustrates a module layout 1000 showing the relevant angles between a module base 1004 and vehicle skin surface (an aircraft skin surface 1002 in this example). The angles include azimuth angle φ₀ in an X-Y plane, and an elevation angle θ in a Z-Y plane.

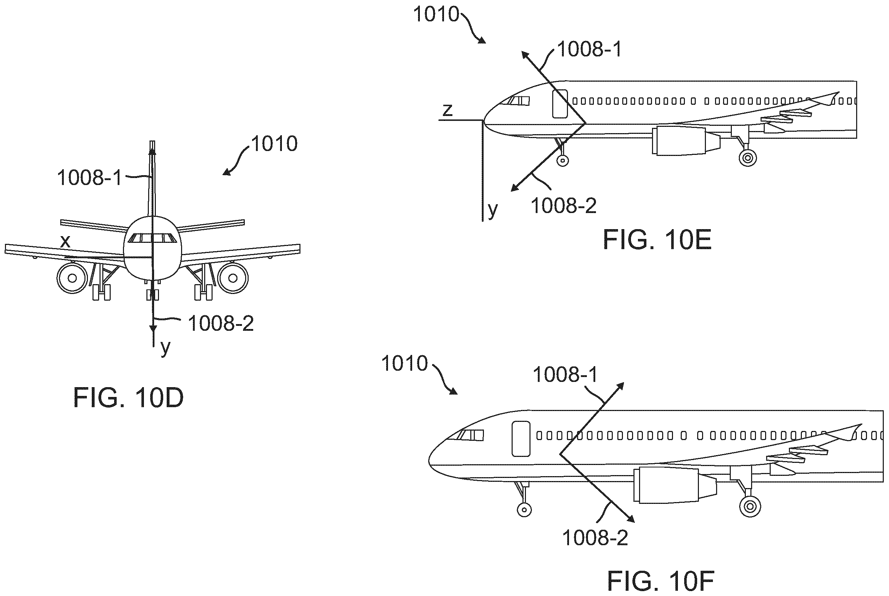

As illustrated, in Figure 10C, there is an angle α between the optical head base 1004 and the aircraft skin surface 1002. Further angle φ₀ equals 90 degrees (front) or 45 degrees (side in this example), angle Δ_{φ} equals 180 degrees (front) or aircraft boundary layer dependent (side), and angle θ equals 45 degrees (front) or aircraft boundary layer dependent (side). The angle between neighboring modules 200 is 90 degrees. Figure 10C illustrates the two emitted (transmitted) light beams directions 1008-1 and 1008-2 provided by the respective modules, module 200-1 and module 200-2. Figure 10D, Figure 10E, and Figure 10F illustrate an arrangement with respect to an aircraft body 1010 and the light beam directions 1008-1 and 1008-2 provided by the respective modules, module 200-1 and module 200-2. In particular, Figure 10D illustrates light beam directions from a front view of a vehicle with the use of a two set of modules. Figure 10E illustrates light beam directions from a side view of a vehicle with the use of a two set of modules positioned in a first configuration. Figure 10F illustrates light beam directions from a side view of a vehicle with the use of a two set of modules positioned in a second configuration.

The two set module 200 arrangement described in Figures 10A through 10E may be used to determine angle of attack (AoA) and true airspeed (TAS). In this example, there may be an assumption that a side-slip (SSA) is zero. It may be assumed with this arrangement, only in a case of strong side-wind will the SSA not be zero, which typically might happen during landing or take off but normally not in normal cruse. Other systems may be relied on during strong side-wind conditions with this two set module arrangement.

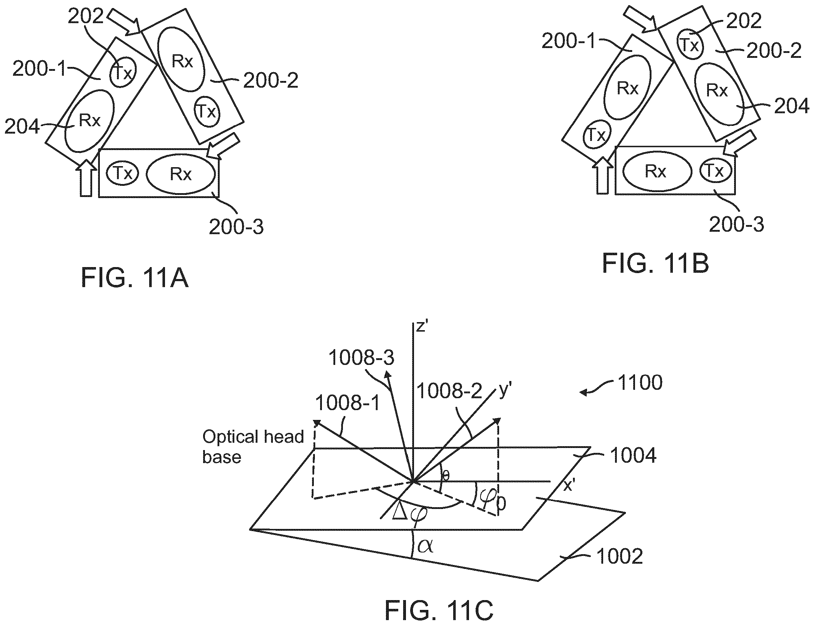

Another possible example is illustrated in Figures 11A through 11F. As illustrated in Figure 11A, this embodiment provides a set of modules that include three modules, module 200-1, module 200-2 and module 200-3. The set of three modules are shown having the respective emitters 202 (transmitters) and receivers 204 in a first arrangement. Figure 11B illustrates another arrangement of the emitters 202 and receivers 204 in a set with three modules that may be used. The two different arrangements (layouts) allow for the facing of the side or front of the body-frame of the aircraft. Figure 11C illustrates a model layout 1100 with three emitted (transmitted) light beams directions 1008-1, 1008-2, and 1008-3 provided by the respective modules, module 200-1, module 200-2 and module 200-3. In the example of Figure 11C, angle α is between the optical head base 1004 and the aircraft shin surface 1002. Further angle φ₀ equals 60 degrees, angle Δ_{φ} equals 120 degrees, and tan (θ) equals the square root of (2)/2. The angle between neighboring modules 200-1, 200-2, and 200-3 is 90 degrees.

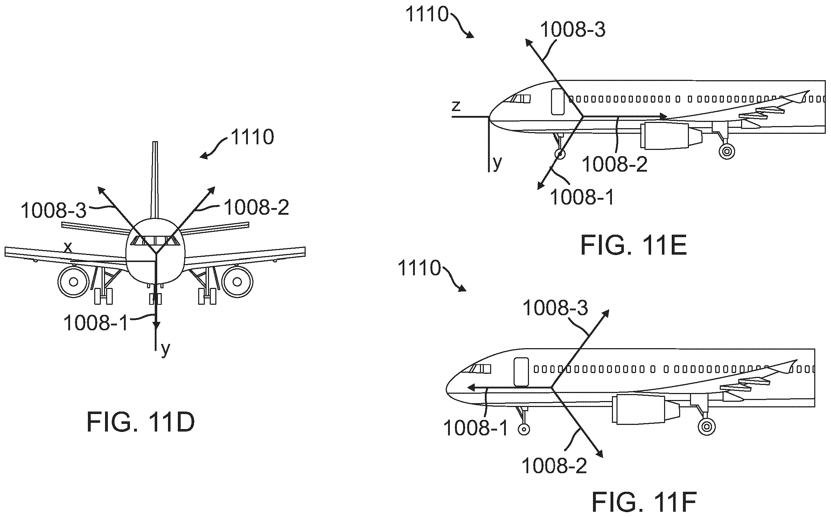

Figure 11D, Figure 11E, and Figure 11F illustrate an arrangement with respect to an aircraft body 1110 and the light beams directions 1008-1, 1008-2, and 1008-3 provided by the respective modules, module 200-1, 200-2, and 200-3. The examples illustrated in Figures 11D through Figure 11F demonstrate module directions with respect to an aircraft body frame axes which are key for AoA and resolution. If the optical base is not parallel to main aircraft axes, a compensation angle of the base with the respect to aircraft skin might be necessary. In particular, Figure 11D illustrates light beam directions from a front view of a vehicle with the use of a three set of modules. Figure 11E illustrates light beam directions from a side view of a vehicle with the use of a three set of modules positioned in a first configuration. Figure 11F illustrates light beam directions from a side view of a vehicle with the use of a three set of modules positioned in a second configuration.

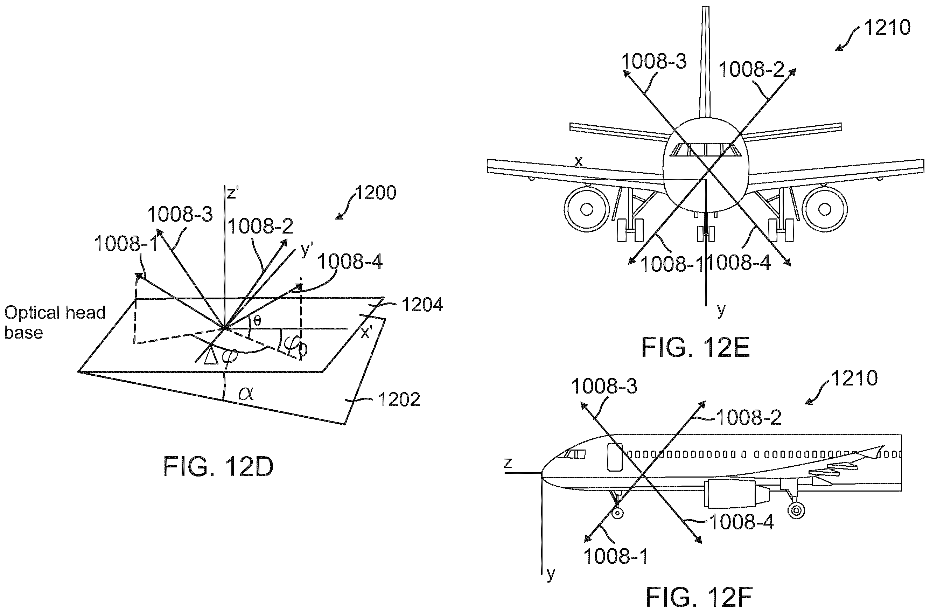

Still another possible example is illustrated in Figures 12A through 12F. As illustrated in Figure 12A this embodiment provides a set of modules with four modules 200 that include module 200-1, module 200-2, module 200-3, and module 200-4 with a first arrangement of emitters 202 and receivers 204. Figure 12B illustrates a second arrangement of the emitters 202 and receivers 204 in a set of four modules 200. Further still Figure 12C illustrates yet a third arrangement of emitters 202 and receivers 204 in a set of four modules 200. The three different arrangements (layouts) also allow for the facing of the side or front of the body-frame of the aircraft. Figure 12D illustrates a model layout 1200 with four emitted (transmitted) light beams directions 1008-1, 1008-2, 1008-3, and 1008-4 provided by the respective modules, module 200-1, module 200-2, module 200-3 and module 200-4. In regard to Figure 12D, angle α is between the module base 1204 and the vehicle skin surface 1202 (aircraft skin surface in an example). Further angle φ₀ equals 45 degrees, angle Δ_{φ} equals 90 degrees, and angle θ equals 45 degrees in this example. The angle between neighboring modules equals 60 degrees.

Figure 12E and Figure 12F illustrate an arrangement with respect to an aircraft body 1210 and the light beam directions 1008-1, 1008-2, 1008-3, and 1008-4 provided by a four set of respective modules, module 200-1, module 200-2, module 200-3 and module 200-4. The examples illustrated in Figures 12E and Figure 12F demonstrate module directions with respect to an aircraft body frame axes which are key for AoA and resolution. If the optical base not parallel to main aircraft axes, a compensation angle of the base with the respect to aircraft skin might be necessary.

The use of sets of modules 200 makes use of symmetry to cancel out potential systematic effects. In one example, the four beam direction example discussed above allows for a three plus one strategy. The three plus one strategy allows to measure a vector in three independent directions to outcome a vector plus one as backup. The four directions are arranged, as discussed above, independently in space to maximize the sensitivity of most critical quantities of air-data such as TAS and AoA.

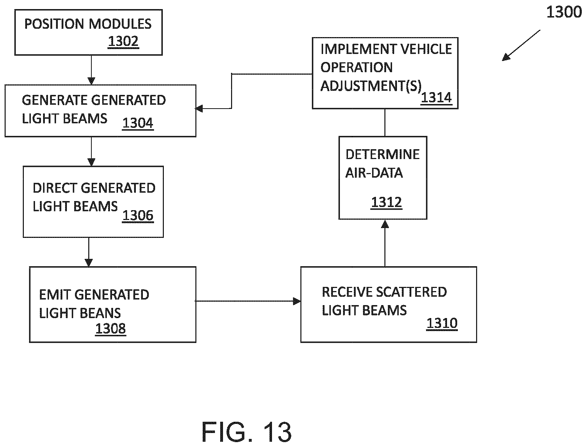

One method of operating a modular air-data system is illustrated in the air-data gathering flow diagram 1300 of Figure 13. The air-data gathering flow diagram 1300 includes a series of sequential blocks. The sequence of blocks may occur in another order or even in parallel in other embodiments. Hence, the present invention is not limited to the sequence of block set out in the air-data gathering flow diagram 1300 of Figure 13.

The air-data gathering diagram 1300 starts at block 1302 positioning the modules. As discussed above, modules 200 are positioned in relation to a vehicle to monitor select areas or regions of an atmosphere in generating air-data. As further discussed above, a set of modules may be positioned to maximize sensitivity of most critical quantities. Positioning of the modules may include setting an angle between a module base and the vehicle skin surface (aircraft skin surface in an avionic example) for each module 200 in a set of modules.

At block 1304, a laser 105 of an optical head 102 generates the generated light beams. The generated light beams are directed to modules 200 at block 1306. In one example, this is done with the beam splitting optics 107. The generated light beams are emitted (transmitted) by the modules 200 at block 1308. In one example, this is done with an emitter 202 (transmitter) of each module 200. The emitted generated light beams are scattered off particles in the atmosphere. Some of the scattered light beams are reflected back to a receiver 204. The receiver 204 receives the scattered light beams at block 1310. The scattered light beams are processed at block 1312. The processing may include Doppler shift calculations, temperature based on a broadening in the scattered light beam, and particle density in determining the air-data. In a wind gust alleviation application, a Doppler shift calculations may be used based at least in part on the generated light beams, the received scattered light beams to determine wind gusts at select distances from the vehicle.

The determined air-data may be used by a vehicle to make operation adjustments at block 1314. For example, in the wind gust adjustment example discussed above, a change in operating speed or flap position may occur in response to the determined air-data. The process then continues at block 1304 generating light beams.

### EXAMPLE EMBODIMENTS

Example 1 includes a modular air-data system. The modular air-data system includes a plurality of modules and an optical head. The plurality of modules are positioned on a vehicle to monitor at least one area of an atmosphere around the vehicle. Each module includes an emitter and a receiver. The emitter is configured to emit generated light beams. The receiver is configured to receive scattered light beams. The scattered light beams are caused by the emitted generate light beams being scattered off of particles in the atmosphere. The optical head is remotely located from the plurality of modules. The optical head includes a laser, a detector, and a controller. The laser is coupled with the emitter of each module. The laser is configured to generate the generated light beams. The detector is coupled with the receiver of each module. The detector is configured to at least one of detect and process the scattered light beams. The controller is in communication with at least one of the laser and the detector. The controller is configured to determine air-data based on the generated light beams and the scattered light beams detected and processed by the detector.

Example 2 includes the modular air-data system of Example 1, wherein at least some of the plurality modules are spaced apart from each other to monitor different areas of the atmosphere around the vehicle.

Example 3 includes the modular air-date system of any of the Examples 1-2, further including an emit filer path for each module and a scattered fiber path for each module. The emit fiber optic path provides a generated signal path for the generated light beams from the laser of the optical head to the emitter of the at least one module. The scattered fiber optic path provides a scattered signal path for the scattered light beams from the receiver of the at least one module to the detector.

Example 4 includes the modular air-date system of any of the Examples 1-3, wherein the detector includes an interferometer.

Example 5 includes the modular air-date system of any of the Examples 1-4, wherein the plurality of modules includes at least one set of modules. The modules in the at least one set of modules are positioned to cancel out potential systematic effects.

Example 6 includes the modular air-date system of any of the Examples 1-5, wherein the controller is configured to determine which module of the plurality of modules received the scattered light beams by a location of the scattered light beams received at the detector.

Example 7 includes the modular air-date system of any of the Examples 1-6, wherein the optical head further includes a clock that is in communication with the controller. The controller configured to associate determined air-data at select distances from the vehicle using the clock.

Example 8 includes the modular air-date system of any of the Examples 1-7, wherein the optical head further includes a memory to store operating instructions implemented by the controller.

Example 9 includes the modular air-date system of any of the Examples 1-8, wherein the controller is configured to adjust operations of the vehicle based on the determined air-data.

Example 10 includes the modular air-date system of any of the Examples 1-9, further including a bracket that is configured to mount the at least one module to the vehicle in manner to direct emitted light beams at a select angle in relation to a surface of the vehicle that includes the modular air-data system.

Example 11 includes the modular air-date system of any of the Examples 1-10, wherein at least one module of the plurality of modules is replaceable.

Example 12 includes the modular air-date system of any of the Examples 1-11, further including beam splitting optics that are configured to split the generated light beams to each of the modules.

Example 13 includes a modular air-data system. The modular air-data system includes a plurality of modules and an optical head. Each module is positioned on a vehicle to monitor at least one area of an atmosphere around the vehicle. Each module includes an emitter and a receiver. The emitter is configured to emit generated light beams. The receiver is configured to receive scattered light beams. The scattered light beams being caused by the emitted generated light beams being scattered off of particles in the atmosphere. The optical head includes a laser, beam splitting optics, a detector, a controller and a clock. The laser is coupled with the emitter of each module. The laser is configured to generate the generated light beams. The beam splitting optics are configured to split the generated light beams to each of the modules. The detector is coupled with the receiver of each module. The detector is configured to at least one of detect and process the scattered light beams. The controller is in communication with at least one of the laser and the detector. The controller is configured to determine air-data based on the generated light beams and the scattered light beams detected and processed by the detector. The clock is in communication with the controller. The controller is configured to associate determined air-data at select distances from the vehicle using the clock.

Example 14 includes the modular air-data system of Example 14, wherein at least some of the plurality modules are spaced apart from each other to monitor different areas of the atmosphere around the vehicle.

Example 15 includes the modular air-data system of any of the Examples 13-14, further including an emit fiber optic path for each module of the plurality of modules and a scattered fiber optic path for each module of the plurality of modules. The emit fiber optic path provides a generated signal path for the generated light beams from the laser of the optical head to the emitter of the at least one module. The scattered fiber optic path provides a scattered signal path for the scattered light beams from the receiver of the at least one module to the detector.

Example 16 includes the modular air-data system of any of the Examples 13-15, wherein the controller is further configured to adjust an operation of the vehicle based on the determined air-data.

Example 17 includes a method of operating a modular air-data system. The method includes generating generated light beams with a laser; directing the generated light beams to a plurality of spaced modules; emitting the generated light beams from emitters of the plurality of spaced modules; receiving scattered light beams with receivers of the plurality of spaced modules; and determining air-data based in part on the received scattered light beams.

Example 18 includes the method of Example 17, further including positioning each module of the plurality of modules at a desired location and at a desired angle between an optical head base and a vehicle skin surface so the generated light beams are emitted from a vehicle a select angle in relation to the vehicle skin surface.

Example 19 includes the method of any of the Examples 17-18, wherein directing the generated light beams to the plurality of spaced modules further includes splitting the generated light beams with beam splitting optics.

Example 20 includes the method of any of the Examples 17-19, further including using at least one of Doppler shift calculations, temperature based on a broadening in the scattered light beam, and particle density in determining the air-data.

Although specific embodiments have been illustrated and described herein, it will be appreciated by those of ordinary skill in the art that any arrangement, which is calculated to achieve the same purpose, may be substituted for the specific embodiment shown. This application is intended to cover any adaptations or variations of the present invention. Therefore, it is manifestly intended that this invention be limited only by the claims and the equivalents thereof.

## Claims

1. A modular air-data system (100) comprising:
a plurality of modules (200) positioned on a vehicle to monitor at least one area of an atmosphere around the vehicle, each module (200) including,
an emitter (202) configured to emit generated light beams, and
a receiver (204) configured to receive scattered light beams, the scattered light beams being caused by the emitted generated light beams being scattered off of particles in the atmosphere; and
an optical head (102) remotely located from the plurality of modules (200), the optical head (102) including,
a laser (105) in communication with the emitter (202) of each module (200), the laser (105) configured to generate the generated light beams,
a detector (109) in communication with the receiver (204) of each module (200), the detector (109) configured to at least one of detect and process the scattered light beams, and
a controller (104) in communication with at least one of the laser (105) and the detector (109), the controller (104) configured to determine air-data based on the generated light beams and the scattered light beams detected and processed by the detector (109).

2. The modular air-data system (100) of claim 1, wherein at least some of the plurality modules (200) are spaced apart from each other to monitor different areas of the atmosphere around the vehicle.

3. The modular air-data system (100) of claim 1, further comprising:
an emit fiber optic path (120) for each module (200) of the plurality of modules (200), the emit fiber optic path (120) providing a generated signal path for the generated light beams from the laser (105) of the optical head (102) to the emitter (202) of the at least one module (200); and
a scattered fiber optic path (122) for each module (200) of the plurality of modules (200), the scattered fiber optic path (122) providing a scattered signal path for the scattered light beams from the receiver (204) of the at least one module (200) to the detector (109).

4. The modular air-data system (100) of claim 1, wherein the detector (109) includes an interferometer.

5. The modular air-data system (100) of claim 1, wherein the plurality of modules (200) includes at least one set of modules (200), the modules (200) in the at least one set of modules (200) positioned to cancel out potential systematic effects.

6. The modular air-data system (100) of claim 1, wherein the controller (104) is configured to determine which module (200) of the plurality of modules (200) received the scattered light beams by a location of the scattered light beams received at the detector (109).

7. The modular air-data system (100) of claim 1, wherein the optical head (102) further comprises:
a clock (111) in communication with the controller (104), the controller (104) configured to associate determined air-data at select distances from the vehicle using the clock (111).

8. A method of operating a modular air-data system (100), the method comprising:
generating generated light beams with a laser (105);
directing the generated light beams to a plurality of spaced modules (200):
emitting the generated light beams from emitters (202) of the plurality of spaced modules (200);
receiving scattered light beams with receivers (204) of the plurality of spaced modules (200); and
determining air-data based in part on the received scattered light beams.

9. The method of claim 8, further comprising:
positioning each module (200) of the plurality of modules (200) at a desired location and at a desired angle between an optical head base (1004) and an vehicle skin surface (1002) so the generated light beams are emitted from a vehicle a select angle in relation to the vehicle skin surface (1002).

10. The method of claim 8, wherein directing the generated light beams to the plurality of spaced modules (200) further comprises:
splitting the generated light beams with beam splitting optics (109).
